## Europäisches Patentamt

## European Patent Office

## Office européen des brevets

(19)

(11) Publication number: **0 213 292**
**B1**

(12) **EUROPEAN PATENT SPECIFICATION**

(45) Date of publication of the patent specification:
**18.10.89**

(51) Int. Cl.⁴: **F16H 35/10**

(21) Application number: **86108005.9**

(22) Date of filing: **12.06.86**

(54) Overload-protected gear.

(30) Priority: **26.06.85 DK 2889/85**

(73) Proprietor: **Dansk Gartneri-Teknik A/S, Egeskovvej 6, DK-2660 Brondby Strand(DK)**

(43) Date of publication of application:
**11.03.87 Bulletin 87/11**

(72) Inventor: **Hansen, Poul Henning, Leras 30, DK-2670 Greve Strand(DK)**

(45) Publication of the grant of the patent:
**18.10.89 Bulletin 89/42**

(74) Representative: **Tetzner, Volkmar, Dr.-Ing. Dr. jur., Van-Gogh-Strasse 3, D-8000 München 71(DE)**

(84) Designated Contracting States:
**DE GB IT NL SE**

(56) References cited:
**CH-A- 397 369**
**CH-A- 499 035**
**DE-A- 2 149 017**
**DE-C- 356 936**
**DE-C- 760 423**
**FR-A- 1 162 859**
**GB-A- 2 074 286**
**US-A- 1 557 956**

**PATENTS ABSTRACTS OF JAPAN, vol. 8, no. 60 (P-262)[1497], 22nd March 1984; & JP-A-58 210 532 (SEIBU DENKI KOGYO K.K.) 07-12-1983**

ACTORUM AG

## Description

The present invention relates to a gear transmission for overload protection as defined in the preamble of claim 1 and known from JP-A 58 210 532.

It is the object of the present invention to provide a device of the above type, which is simple and inexpensive in manufacture, sturdy and durable and is adapted to receive and transmit both positive and negative torques.

This object is solved by the features as defined in claim 1.

The suggested system may be used wherever a driving engine is to pull mechanical installations, e.g. transport installations, up- and over doors, automatically opening and closing windows etc., and engine, toothed bars, worm wheels, window fittings etc. are efficiently protected against overload.

The newly developed system is furthermore advantageous by being suitable for being built into a closed gear box easily mounted on the main shaft.

The invention will be described below with reference to the accompanying drawing, in which

Figure 1 is a simplified sectional view through the main shaft and the counter shaft of the most important parts of a system according to the invention,

Figure 2 is a left-hand view of the parts of Figure 1,

Figure 3 is a sectional view through the main shaft and counter shaft of a second embodiment of the gear transmission,

Figure 4 is a gear transmission in a gear box.

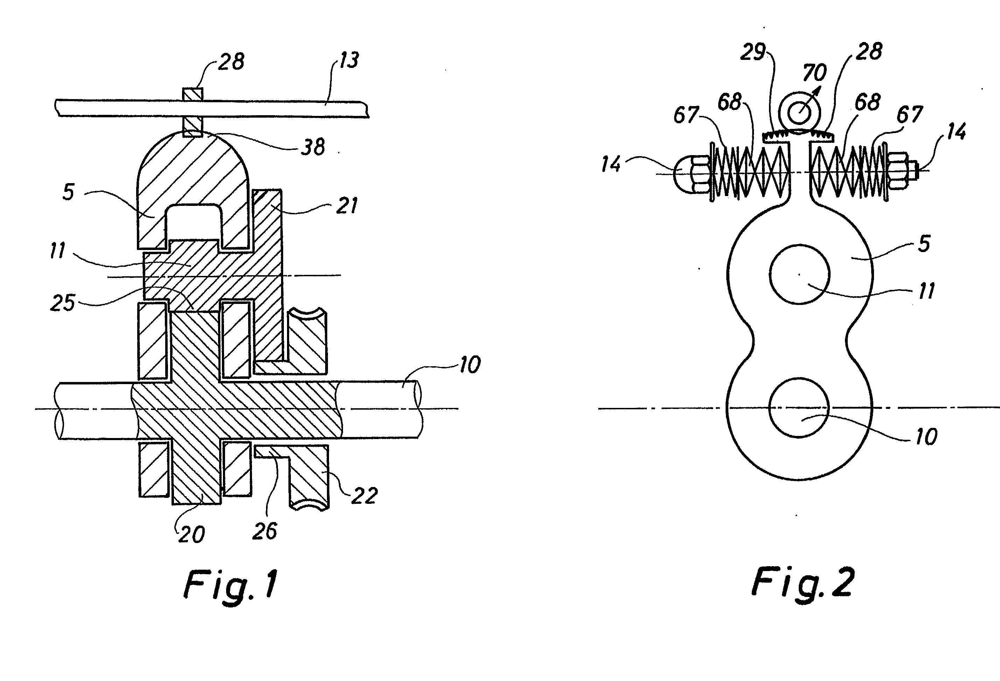

Figure 1 illustrates the most important elements of the new gear transmission. A main shaft 10 is through-going and is provided with a first gear 20 mounted on and rotating together with the main shaft 10. The gear 20 is in mesh with a counter wheel (second gear) 25 rotating round a displaceable counter shaft 11, the shaft 11 being suspended in a socalled bearing frame 5. This bearing frame is U-shaped and supported on the shaft in bearings on both sides of the first gear 20. The counter shaft 11 and the main shaft 10 extend through the bearing frame 5, and the bearing frame is tiltable or slightly rotatable round the main shaft, its movements are, however, restricted, as it is fixed in its free end e.g. as illustrated in Figure 2 by means of a bolt 14 between disk-shaped springs 67, 68. In its other end the counter shaft 11 has a third gear or counter wheel 21 capable of rotating together with the counter shaft. Said third gear 21 is drivingly connected to a fourth gear 26 situated on a worm wheel 22 with the same axis of rotation as the first gear 20 but freely pivotal in relation to the main shaft 10. The worm wheel is driven by a worm (not shown), which is driven by an electromoter (not shown).

In its preferred embodiment the gear transmission is developed for opening and closing skylights in a greenhouse and preferably placed midway in the the main shaft extending in the entire length of the greenhouse. The main shaft may be provided with toothed gears opposite each skylight, which can be opened and closed by the toothed gear via a toothed bar. The new gear transmission may of course also be placed at the end of the main shaft.

When the row of windows is to be opened and closed, the engine is started and drives the worm, which drives the worm wheel 22 with the adjacent gear 26, and through the gear 21, the counter shaft 11, the gear 25, the gear 20 and the main shaft 10 the driving torque is transferred to the various rack- and- pinions placed opposite each window.

In case of jamming, optionally caused by a jammed window, the main shaft 10 will hardly be able to rotate. A driving power on the worm wheel will then have the effect that the displaceable counter shaft attempts to move in a circular arc round the main shaft 10. This movement can be used for registering a hindrance somewhere. The free end of the bearing frame will be displaced out of its position of rest in the centre between the two sets of springs 67, 68. This displacement of the free end of the bearing frame may be used for displaying the size of the driving torque on the main shaft. In the embodiment illustrated in Figures 1 and 2 the free end 38 of the bearing frame 5 engages a gear 28 by way of a toothed bar 29. The gear 28 or the shaft 13, on which the gear is situated, is again connected with a pointer or an arm 70. A micro-switch (not shown) switching off the electromotor is arranged in the right and the left outermost position, respectively, influenced either by the arm, the toothed bar or the bearing frame.

It is obvious that the gear transmission described is not restricted for use in a greenhouse, and that the gear transmission may be used wherever motordriven installations, e.g. transport systems, machine tools, motordriven up- and over doors etc., comprising a gear drive should be protected against overload.

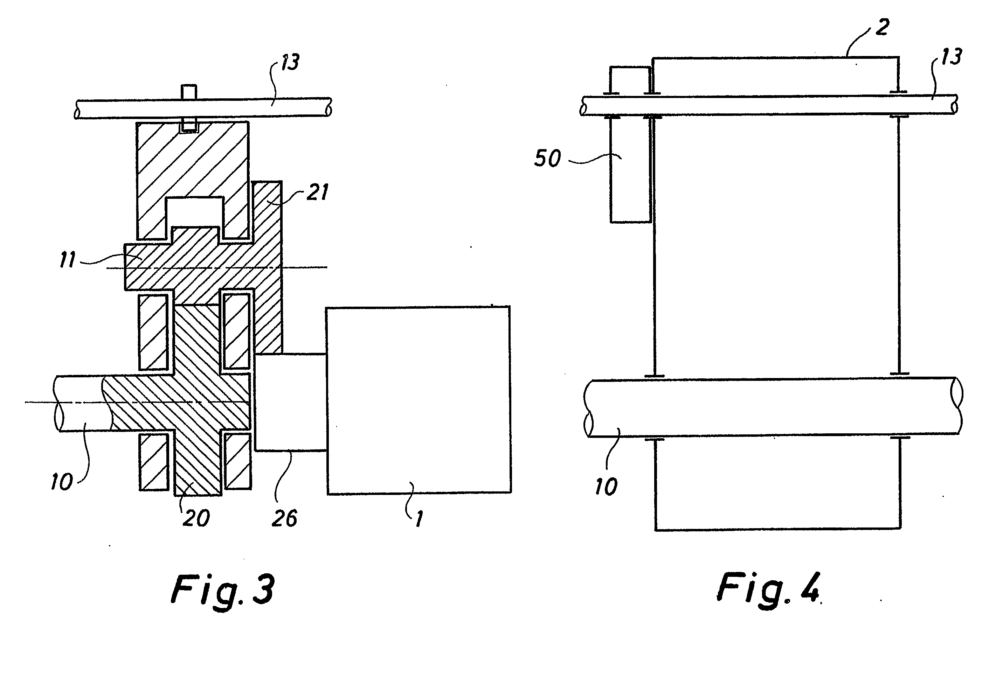

In another embodiment illustrated in Figure 3 the main shaft is not through-going and the fourth gear 26 is mounted directly on an engine.

The part of the bearing frame farthest away in relation to the main shaft is preferably arranged to actuate sensor means. The toothed bar 29 is as illustrated in Figure 2 mounted on the outermost end of the bearing frame to obtain maximum movement for actuating a sensor means, such as the gear 28 with the pointer arm 70. The switch or micro-switch capable of switching off the electromotor may advantageously be located outside the gear transmission system, which is expediently embedded in a closed oil-filled gear box 2 in Figure 4, in which only the main shaft 10 and the shaft for monitoring the torque are illustrated. The switch may e.g. be mounted in a closed box 50 on one side of the gear box 2. The switches are mounted in such a manner that a specific rotation of the shaft for monitoring the torque in one direction will switch off the engine, and a given rotation, optionally bigger or smaller than the first one, is also capable of switching off the engine. Furthermore, a potentiometer is preferably mounted directly on the shaft 13, or in mesh with the shaft 13, so that the size of the torque can be registered electrically.

A feedback to a control or regulating unit for the installations may be obtained by means of a built-in potentiometer.

The described construction may consequently be used both as an alarm function and as a supervising or measuring function.

The inventive gear transmission may be used as a unit for sensing a torque and may be built into a system without regard to other transmissions, if any.

The inventive transmission can together with a driving engine be used as a complete driving unit.

The inventive gear transmission allows a continuous supervision of the load torque in a drive-system. The construction is particularly advantageous by the complete tooth meshing being maintained even under the maximum allowable loads. As a result an efficient power transfer and besides less wear on the gears are obtained.

A particular advantage is that the built-in spring effect simultaneously protects all the components forming part of the drive-system, all suddenly arising shock stresses being averted at least partially.

## Claims

1. A gear transmission for overload protection of a drive-system, especially for opening and closing long series of greenhouse windows, comprising a main shaft (10) and a first gear (20) fixed on the main shaft (10), said first gear (20) being in mesh with a second gear (25) which is fixed on a short counter shaft (11) extending in a direction parallel to the main shaft and flexibly and resiliently journalled in a U-shaped bearing frame (5) being movable for a limited distance against spring means (67, 68), and a third gear (21) fixed on said counter shaft (11) and being in mesh with a fourth gear (26) which is axially aligned with the first gear (20), all gears comprising an external cogging, and the movement of the counter shaft (11) being sensed by sensor means, characterized in that said bearing frame encloses only the second gear (25) on the counter shaft and the first gear (20) on the main shaft, the legs of said bearing frame being journalled on the main shaft (10) adjacent to and on both sides of the first gear (20), the closed end (38) of said bearing frame being locked between said spring means (67, 68) which are resilient in a substantially peripheral direction in a plane perpendicular to the main shaft.

2. A gear transmission according to claim 1, characterized in that said fourth gear (26) is journalled on said main shaft (10).

3. A gear transmission according to claim 2, characterized in that the fourth gear (26) is connected to a worm wheel (22) driven by an engine through a worm pinion.

4. A gear transmission according to claim 1, characterized in that said fourth gear (26) is a driving wheel mounted directly on the output shaft of an engine axially aligned with the main shaft (10).

## Revendications

1. Transmission à engrenages de protection contre les surcharges d'un système de commande, destiné en particulier à l'ouverture et à la fermeture de longues séries de fenêtres de serre, comprenant un arbre principal (10) et une première roue dentée (20) calée sur l'arbre principal (10), ladite première roue dentée (20) engrenant avec une seconde roue dentée (25) qui est calée sur un contre-arbre court (11) orienté parallèlement à l'arbre principal et monté à rotation de manière souple et élastique dans un châssis de palier en étrier (5) mobile sur une distance limitée contre la force de ressorts (67, 68), et une troisième roue dentée (21) calée sur ledit contre-arbre (11) et engrenant avec une quatrième roue dentée (26) alignée axialement sur la première roue dentée (20), toutes les roues dentées étant à denture extérieure et le déplacement du contre-arbre (11) étant décelé par un détecteur, caractérisée en ce que ledit châssis de palier n'enveloppe que la seconde roue dentée (25) calée sur le contre-arbre et la première roue dentée (20) calée sur l'arbre principal, les pieds dudit châssis de palier étant montés au moyen de coussinets sur l'arbre principal (10) à côté et de chaque côté de la première roue dentée (20), l'extrémité fermée (38) dudit châssis de palier étant bloquée entre lesdits ressorts (67, 68) qui sont élastiques dans une direction sensiblement périphérique, dans un plan perpendiculaire à l'arbre principal.

2. Transmission à engrenages selon la revendication 1, caractérisée en ce que ladite quatrième roue dentée (26) est montée de manière à pouvoir tourner sur ledit arbre principal (10).

3. Transmission à engrenages selon la revendication 2, caractérisée en ce que la quatrième roue dentée (26) est reliée à une vis sans fin (22) entraînée par un moteur, par l'intermédiaire d'un pignon à vis sans fin.

4. Transmission à engrenages selon la revendication 1, caractérisée en ce que ladite quatrième roue dentée (26) est une roue d'entraînement montée directement sur l'arbre de sortie d'un moteur aligné axialement sur ledit arbre pricipal (10).

## Patentansprüche

1. Getriebe zum Überlastungsschutz eines Antriebssystemes, insbesondere zum Öffnen und Schließen langer Serien von Gewächshausfenstern, enthaltend eine Hauptwelle (10) und eine erstes Zahnrad (20), das auf der Hauptwelle (10) befestigt ist, wobei das erste Zahnrad (20) in Eingriff mit einem zweiten Zahnrad (25) steht, das auf einer kurzen Gegenwelle (11) befestigt ist, die sich parallel zur Hauptwelle erstreckt und flexibel und federnd in einem U-förmigen Tragrahmen (5) gelagert ist, wobei sie innerhalb eines begrenzten Bereiches gegen Federelemente (67, 68) beweglich ist, ferner enthaltend ein drittes Zahnrad (21), das auf der Gegenwelle (11) befestigt ist und im Eingriff mit einem vierten Zahnrad (26) steht, das axial auf das erste Zahnrad (20) ausgerichtet ist, wobei alle Zahnräder eine Außenverzahnung aufweisen und wobei die Bewegung der Gegenwelle (11) von Sensoren gemessen wird, dadurch gekennzeichnet, daß der Tragrahmen nur das zweite Zahnrad (25) auf der Gegenwelle und das erste Zahnrad (20) auf der Hauptwelle umfaßt, wobei die Schenkel des Tragrahmens auf der Hauptwelle (10) angrenzend an und auf den beiden Seiten des ersten Zahnrades (20) gelagert sind, wobei das geschlossene Ende (38) des Tragrahmens zwischen den Federelementen (67, 68) eingeschlossen ist im wesentlichen in Umfangsrichtung verlaufenden Richtung in einer Ebene senkrecht zur Hauptwelle federnd sind.

2. Getriebe nach Anspruch 1, dadurch gekennzeichnet, daß das vierte Zahnrad (26) auf der Hauptwelle gelagert ist.

3. Getriebe nach Anspruch 2, dadurch gekennzeichnet, daß das vierte Zahnrad (26) mit einem Schneckenrad (22) verbunden ist, das von einem Motor durch ein Schnekkenritzel angetrieben wird.

4. Getriebe nach Anspruch 1, dadurch gekennzeichnet, daß das vierte Zahnrad (26) ein Antriebszahnrad ist, das unmittelbar auf der Ausgangswelle einer Maschine befestigt ist, die axial auf die Hauptwelle (10) ausgerichtet ist.

Fig.1

Fig.2

EP 0 213 292 B1

Fig. 4

Fig. 3